# DEMANDE DE BREVET EUROPEEN

(11) **EP 1 107 354 A1**
(43) Date de publication de la demande: **13.06.2001**
(21) Numéro de dépôt: 00403463.3
(22) Date de dépôt: 11.12.2000
(51) Int. Cl.: H01Q 1/32, H01Q 3/24, B60R 25/00, E05B 49/00

(54) **Véhicule automobile équipé d'un système d'accès sélectif dit "mains libres"**

(30) Priorité: 10.12.1999 FR 9915581
(71) Demandeur: VALEO SECURITE HABITACLE, 94042 Créteil (FR)
(72) Inventeur: Morillon, Jacques, 91400 Massy (FR)
(74) Mandataire: Lenne, Laurence

(57) **Abrégé**

Dans ce véhicule équipé d'un dispositif de reconnaissance (1) apte à échanger à distance des données avec un organe d'identification (11) porté par un utilisateur, pour permettre l'accès au véhicule lorsque l'organe d'identification a été authentifié par le dispositif de reconnaissance, ce dernier étant relié à une paire d'antennes (2, 3) latérales ayant chacune, lorsqu'elle est alimentée à puissance nominale, une zone de couverture englobant l'intérieur du véhicule et débordant latéralement des deux côtés de celui-ci pour permettre un dialogue entre le dispositif de reconnaissance et l'organe d'identification lorsque ce dernier est situé dans la zone de couverture d'au moins une des antennes, le dispositif de reconnaissance (1) est apte à commander, en réponse à une action de l'utilisateur sur un organe extérieur placé sur un côté du véhicule, l'alimentation à la puissance nominale de l'antenne située du même côté que l'organe extérieur, et l'alimentation à une puissance réduite de l'antenne située du côté opposé du véhicule, pour que cette dernière antenne ait une zone de couverture réduite (Z' 1).

## Description

La présente invention concerne un véhicule automobile équipé d'un système d'accès dit "mains libres".

Dans un tel système, un dispositif de reconnaissance, parfois appelé aussi dispositif d'identification, est installé sur le véhicule pour commander les moyens de verrouillage des portes ou autres ouvrants du véhicule, ce dispositif de reconnaissance étant apte à échanger à distance des données avec un organe d'identification, parfois appelé aussi "identifiant", porté par un utilisateur, pour permettre l'accès au véhicule lorsque l'organe d'identification a été authentifié par le dispositif de reconnaissance. Pour permettre le dialogue entre le dispositif de reconnaissance et l'organe d'identification, plusieurs antennes sont généralement réparties sur le pourtour du véhicule, afin de détecter la présence de l'organe d'identification à l'extérieur du véhicule. De telles antennes sont, par exemple, disposées dans les rétroviseurs latéraux, les poignées de porte, les montants de porte, ... Lorsque l'utilisateur a commandé le verrouillage des portes du véhicule, par exemple en appuyant sur un bouton prévu à cet effet sur la poignée de porte extérieure, et qu'il s'éloigne du véhicule, le système assure le verrouillage automatique des portes et autres ouvrants du véhicule, dès que l'utilisateur portant l'organe d'identification est sorti de la zone de couverture desdites antennes extérieures.

En outre, un tel système peut également inhiber des dispositifs d'anti-démarrage électroniques du moteur du véhicule, lorsqu'une personne, munie d'un organe d'identification l'habilitant à conduire le véhicule, est à l'intérieur de l'habitacle du véhicule. Dans ce cas, les antennes sont disposées par exemple sur le tableau de bord, dans les sièges du véhicule ou sur les parois intérieures des portières.

Toutefois, le nombre d'antennes à implanter sur le véhicule devient important, ce qui augmente le coût et le temps de montage du système sur le véhicule.

C'est pourquoi, la présente société demanderesse a déjà proposé un véhicule automobile équipé d'un système d'accès dit "mains libres" du genre sus-indiqué, comportant au moins une paire d'antennes placées respectivement de chaque côté du véhicule, les deux antennes ayant une zone de couverture commune, couvrant l'intérieur du véhicule, pour que le dispositif de reconnaissance soit apte à détecter la présence d'un organe d'identification dans ladite zone de couverture commune, lorsque ladite paire d'antennes reçoit un signal en provenance du même organe d'identification, chaque antenne de ladite paire d'antennes ayant également sa propre zone de couverture, à l'extérieur du véhicule, pour que le dispositif de reconnaissance soit apte à détecter la présence d'un organe d'identification dans l'une des deux zones de couverture propres, lorsque l'antenne associée reçoit seule un signal en provenance de l'organe d'identification.

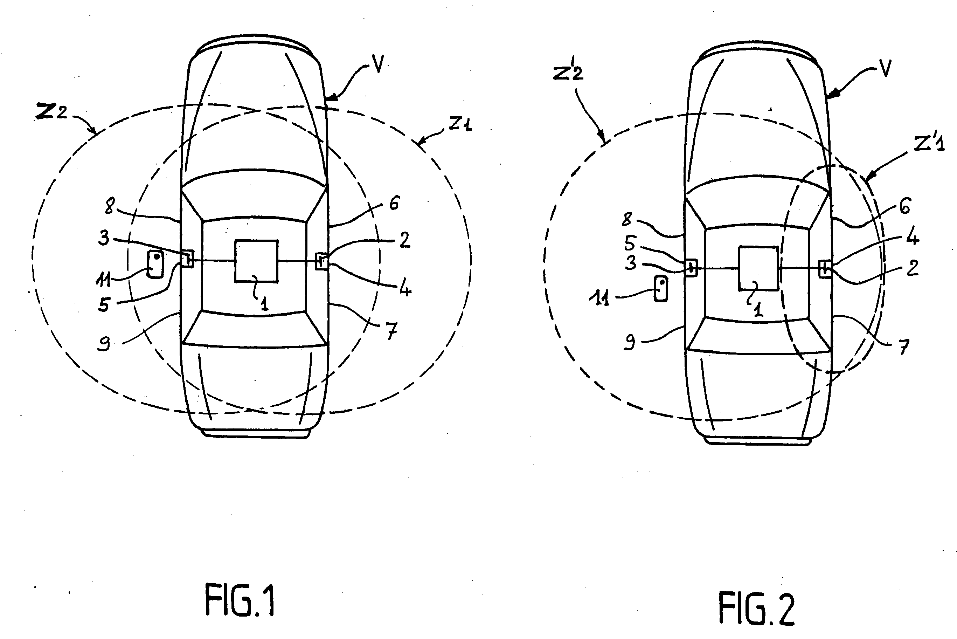

Toutefois, afin d'atteindre une portée de l'ordre de 2 m à l'extérieur du véhicule, il est parfois nécessaire d'alimenter les antennes avec une puissance électrique nominale relativement importante. Ceci est notamment le cas lorsque les antennes sont implantées à l'intérieur de l'habitacle, par exemple dans la garniture interne des montants de porte. Dans ces conditions, il peut arriver que lors de l'envoi d'un signal d'interrogation par le dispositif de reconnaissance, via les deux antennes, la zone de couverture de chaque antenne, c'est-à-dire la zone dans laquelle la détection d'un organe d'identification porté par un utilisateur est possible, déborde de chaque côté du véhicule comme cela est illustré dans la figure 1 des dessins annexés.

En se reportant à cette figure 1, on peut voir un véhicule V équipé d'un système d'accès dit "mains libres", qui comporte un dispositif de reconnaissance 1 relié à deux antennes 2 et 3 disposées respectivement du côté droit et du côté gauche du véhicule V, par exemple dans les garnitures internes des piliers milieu 4 et 5 situés respectivement entre les portes droites 6 et 7 et entre les portes gauches 8 et 9 dudit véhicule. Sur la figure 1, on a également représenté, en tirets, les zones de couverture Z1 et Z2 des deux antennes 2 et 3, lorsqu'elles sont alimentées à puissance nominale. Chacune des deux zones déborde des deux côtés du véhicule V. En conséquence, si un utilisateur portant un organe d'identification 11 se trouve dans la position représentée sur la figure 1, près de l'antenne 3, il est détecté à la fois par l'antenne 3 et par l'antenne 2. Ceci peut être gênant si l'on veut avoir une détection sélective de l'organe d'identification 11 selon qu'il se trouve d'un côté ou de l'autre du véhicule V. Une telle sélectivité est intéressante, car elle permet, lorsque l'antenne 2 située du côté droit ou côté passager détecte qu'un utilisateur autorisé s'approche du véhicule de ce côté, de commander par exemple le déverrouillage des serrures des portes uniquement du côté passager, et lorsque l'antenne 3 située du côté gauche ou côté conducteur détecte qu'un conducteur autorisé du véhicule s'approche de ce dernier du côté conducteur, de commander le déverrouillage des serrures des portes uniquement du côté conducteur (ou des deux côtés) et, en plus, d'autres fonctions comme exemple le préchauffage du moteur dans le cas où celui-ci est un moteur diesel.

Pour résoudre ce problème de sélectivité, on pourrait réduire la puissance électrique du signal fourni aux antennes 2 et 3 afin de diminuer leur portée ou zone de couverture, de telle façon que chaque antenne rayonne vers l'extérieur du véhicule V seulement du côté de l'antenne concernée. Toutefois, une telle solution entraînerait bien évidemment une réduction importante, non souhaitée, de la portée de chaque antenne vers l'extérieur du véhicule automobile.

La présente invention a donc pour but de fournir une solution au problème de sélectivité susmentionné dans le cas où la zone de couverture ou zone de détection de chacune des deux antennes déborde des deux côtés du véhicule automobile.

A cet effet, la présente invention fournit un véhicule automobile équipé d'un dispositif de reconnaissance assurant la commande des moyens de verrouillage des ouvrants du véhicule automobile, ledit dispositif de reconnaissance étant apte à échanger à distance des données avec un organe d'identification porté par un utilisateur, pour permettre l'accès au véhicule lorsque l'organe d'identification a été authentifié par le dispositif de reconnaissance, ce dernier étant relié à une paire d'antennes placées respectivement de chaque côté du véhicule et ayant chacune, lorsqu'elle est alimentée à puissance nominale, une zone de couverture qui englobe l'intérieur de l'habitacle du véhicule et qui déborde latéralement à l'extérieur au moins du côté où l'antenne se trouve, pour permettre un dialogue entre le dispositif de reconnaissance et l'organe d'identification lorsque ce dernier est situé dans la zone de couverture d'au moins une desdites antennes, caractérisé en ce que le dispositif de reconnaissance est apte à commander, en réponse à une action de l'utilisateur sur un organe extérieur placé sur un côté du véhicule, l'alimentation à ladite puissance nominale de l'antenne située du même côté que ledit organe extérieur, et l'alimentation à une puissance réduite de l'antenne située du côté opposé du véhicule, pour que cette dernière antenne ait une zone de couverture réduite s'étendant vers l'extérieur du véhicule seulement dudit côté opposé où est située cette antenne.

En conséquence, seule l'antenne qui est alimentée à la puissance nominale et qui est située du même côté que l'organe extérieur sur lequel l'utilisateur a agi, sera apte à détecter la présence éventuelle d'un organe d'identification autorisé à l'extérieur du véhicule du côté dudit organe extérieur sollicité par l'utilisateur.

De préférence, l'alimentation à puissance nominale de l'une des deux antennes et l'alimentation à puissance réduite de l'autre antenne sont décalées dans le temps.

De préférence, la paire d'antennes est placée au milieu des côtés du véhicule.

Par exemple, ladite paire d'antennes peut être implantée dans les poignées de porte ou dans les piliers milieu de la carrosserie du véhicule.

Ledit organe extérieur peut être une poignée de porte ou un bouton poussoir extérieur, sur lequel l'utilisateur agit pour demander le verrouillage ou le déverrouillage des serrures de porte.

D'autres caractéristiques et avantages de l'invention apparaîtront mieux au cours de la description suivante d'un mode de réalisation de l'invention donné à titre d'exemple en référence aux dessins annexés sur lesquels :
- la figure 1 est une vue de dessus d'un véhicule équipé d'un système d'accès dit "mains libres" antérieurement connu ;
- la figure 2 est une vue semblable à la figure 1 montrant un véhicule automobile équipé d'un système d'accès dit "mains libres" selon l'invention.

Le véhicule V représenté sur la figure 2 est semblable à celui représenté sur la figure 1 et, pour cette raison, les éléments qui sont identiques ou qui jouent le même rôle sont désignés par les mêmes numéros de référence dans les figures 1 et 2. Le véhicule V représenté dans la figure 2 diffère essentiellement de celui représenté dans la figure 1 en ce que le dispositif de reconnaissance 1 est apte à alimenter les deux antennes 2 et 3 avec des puissances électriques différentes, en réponse à une action d'un utilisateur sur un organe extérieur du véhicule. Ledit organe extérieur peut être par exemple une poignée de porte ou un bouton poussoir placé par exemple sur la poignée de porte pour commander le verrouillage ou le déverrouillage au moins de la serrure associée à la porte sur laquelle se trouve la poignée de porte ou le bouton poussoir qui est actionné par l'utilisateur.

Par exemple, lorsqu'un utilisateur muni d'un organe d'identification 11 s'approche du véhicule du côté conducteur et tire sur la poignée de la porte 8 (ou appuie sur un bouton extérieur associé à ladite poignée), cette action sur la poignée est détectée par le dispositif de reconnaissance 1 qui envoie un signal d'interrogation vers l'organe d'identification 11, via les antennes 2 et 3. Ce signal d'interrogation est émis à puissance nominale, via l'antenne 3 située du même côté que la porte 8 dont la poignée a été sollicitée, de sorte que la zone Z'2 couverte par l'antenne 3 est identique à la zone Z2 couverte par l'antenne 3 du véhicule V de la figure 1, c'est-à-dire que la zone Z'2 déborde à l'extérieur du véhicule V des deux côtés de celui-ci, cependant de façon plus importante du côté conducteur que du côté passager. Par contre, le signal d'interrogation est émis, via l'antenne 2 située du côté opposé à la porte 8 dont la poignée a été sollicitée, à une puissance réduite telle que la zone Z'1 couverte par l'antenne 2 ne déborde à l'extérieur du véhicule V que du côté où se trouve l'antenne 2, et cela de préférence d'une quantité telle que la zone Z'1 englobe complètement le débordement de la zone Z'2 sur ce même côté du véhicule V. De préférence, le dispositif de reconnaissance 1 commande l'émission à puissance réduite du signal d'interrogation via l'antenne 2 avec un bref décalage temporel par rapport à l'émission à puissance nominale du signal d'interrogation par l'antenne 3.

Dans ces conditions, si l'organe d'identification 11 est bien situé dans la zone Z'2, il est mis en éveil par le signal d'interrogation émis par l'antenne 3 et répond aussitôt à ce signal d'interrogation en renvoyant un signal codé au dispositif de reconnaissance 1. Par contre, si l'organe d'identification 11 ne se trouve pas dans la zone Z'1, il ne peut pas être mis en éveil par le signal d'interrogation émis par l'antenne 2, de sorte qu'il ne réagit pas à ce signal et que le dispositif de reconnaissance 1 ne reçoit aucun signal en réponse au signal émis par l'antenne 2. Le dispositif de reconnaissance 1 est donc capable de déterminer si l'organe d'identification 11 a été "vu" par l'une ou l'autre des deux antennes, l'antenne 3 dans le présent exemple.

Toutefois, l'organe d'identification 11 peut se trouver à l'extérieur ou à l'intérieur du véhicule V dans la zone Z'2 (à l'exclusion de la zone Z'1). Cependant, il existe des moyens connus permettant de savoir si l'utilisateur se trouve dans l'habitacle du véhicule V. Ces moyens connus peuvent être par exemple des contacteurs de siège. Si le contacteur du siège du conducteur n'est pas actionné, cela signifie que le conducteur n'est pas à sa place. Inversement, si le contacteur du siège du conducteur est actionné, cela signifie que le conducteur est à sa place. En conséquence, si le dispositif de reconnaissance 1 avait reçu un signal codé en réponse à l'émission du signal d'interrogation par l'antenne 3, il est capable de déterminer, en combinaison avec l'information fournie par exemple par le contact de siège, si l'utilisateur portant l'organe d'identification 11 se trouve bien à l'extérieur du véhicule V, du côté de la porte 8, et, si cela est le cas, il peut commander par exemple le déverrouillage des portes du véhicule V et, éventuellement, une autre fonction, comme par exemple le préchauffage du moteur du véhicule s'il s'agit d'un moteur diesel.

On notera que si c'était la poignée de la porte 6 qui avait été sollicitée par l'utilisateur, le dispositif de reconnaissance 1 aurait alors envoyé le signal d'interrogation successivement aux antennes 2 et 3, respectivement avec des puissances telles que la zone couverte par l'antenne 2 ait la même étendue que la zone Zl de la figure 1 et que la zone couverte par l'antenne 3 ait une étendue réduite comme la zone Z'1 de la figure 2. Dans ces conditions, le dispositif de reconnaissance 1 aurait été capable de déterminer si un utilisateur autorisé est bien du côté de la porte 6 dont la poignée a été sollicitée, et cela d'une façon semblable à celle décrite plus haut à propos du cas où la poignée de la porte 8 avait été sollicitée par un utilisateur.

Il va de soi que le mode de réalisation de l'invention qui a été décrit ci-dessus a été donné à titre d'exemple purement indicatif et nullement limitatif, et que de nombreuses modifications peuvent être apportées par les hommes de l'art sans pour autant sortir du cadre de l'invention.

## Revendications

1. Véhicule automobile équipé d'un dispositif de reconnaissance (1) assurant la commande des moyens de verrouillage des ouvrants (6-9) du véhicule automobile (V), ledit dispositif de reconnaissance étant apte à échanger à distance des données avec un organe d'identification (11) porté par un utilisateur, pour permettre l'accès au véhicule lorsque l'organe d'identification a été authentifié par le dispositif de reconnaissance, ce dernier étant relié à une paire d'antennes (2, 3) placées respectivement de chaque côté du véhicule et ayant chacune, lorsqu'elle est alimentée à puissance nominale, une zone de couverture (Z1, Z2) qui englobe l'intérieur de l'habitacle du véhicule et qui déborde latéralement à l'extérieur au moins du côté où l'antenne se trouve, pour permettre un dialogue entre le dispositif de reconnaissance et l'organe d'identification lorsque ce dernier est situé dans la zone de couverture d'au moins une desdites antennes, le dialogue étant déclenché en réponse à une action de l'utilisateur sur un organe extérieur du placé sur un côté du véhicule, caractérisé en ce que le dispositif de reconnaissance (1) est apte à commander, en réponse à une action de l'utilisateur sur ledit organe extérieur, l'alimentation à ladite puissance nominale de l'antenne située du même côté que ledit organe extérieur, et l'alimentation à une puissance réduite de l'antenne située du côté opposé du véhicule, pour que cette dernière antenne ait une zone de couverture réduite (Z'1) s'étendant vers l'extérieur du véhicule seulement dudit côté opposé où est située cette antenne, de sorte que le dispositif de reconnaissance (1) est capable de déterminer dans quelle zone ou de quel côté du véhicule l'organe d'identification (11) a été vu par l'une ou l'autre des deux antennes (2, 3) pour commander au moins une fonction dépendant de la zone où l'organe d'identification a été vu.

2. Véhicule selon la revendication 1, caractérisé en ce que l'alimentation à puissance nominale de l'une des deux antennes (2, 3) et l'alimentation à puissance réduite de l'autre antenne sont décalées dans le temps.

3. Véhicule selon la revendication 1 ou 2, caractérisé en ce que ladite paire d'antennes (2, 3) est placée sensiblement au milieu des côtés du véhicule (V).

4. Véhicule selon la revendication 3, caractérisé en ce que ladite paire d'antennes (2, 3) est implantée dans les poignées de porte ou dans les piliers milieu (4, 5) de la carrosserie du véhicule.

5. Véhicule selon l'une quelconque des revendications 1 à 4, caractérisé en ce que ledit organe extérieur est une poignée de porte ou un bouton poussoir extérieur.
